# EUROPÄISCHE PATENTSCHRIFT

(11) **EP 4 409 253 B1**
(45) Veröffentlichungstag und Bekanntmachung des Hinweises auf die Patenterteilung: **04.06.2025**
(21) Anmeldenummer: 22802889.0
(22) Anmeldetag: 27.09.2022
(51) Int. Cl.: G01L 19/08, G01L 27/00

(54) **DRUCKSENSORANORDNUNG MIT EINER FERNBETÄTIGT PARAMETRIERBAREN, ELEKTRISCHEN SCHWELLENWERTEINRICHTUNG**
PRESSURE SENSOR ASSEMBLY WITH A REMOTELY PARAMETERISABLE, ELECTRICAL THRESHOLD DEVICE
ENSEMBLE CAPTEUR DE PRESSION COMPRENANT UN DISPOSITIF DE VALEUR DE SEUIL ÉLECTRIQUE PARAMÉTRABLE PAR COMMANDE À DISTANCE

(30) Priorität: 29.09.2021 DE 102021125293
(43) Veröffentlichungstag der Anmeldung: 07.08.2024
(73) Patentinhaber: Gneuss GmbH, 32549 Bad Oeynhausen (DE)
(72) Erfinder: GNEUSS, Daniel, Charlotte, NC 28277 (US); GNEUSS, Stephan, 32547 Bad Oeynhausen (DE); GNEUSS, Detlef, 6919 Carabietta (CH)
(74) Vertreter: Tarvenkorn, Oliver
(86) Internationale Anmeldenummer: PCT/DE2022/100717
(87) Internationale Veröffentlichungsnummer: WO 2023/051869

(56) Entgegenhaltungen:
- EP-A1- 3 396 347
- DE-A1- 102008 051 372

## Beschreibung

Die Erfindung betrifft eine Drucksensoranordnung mit einer fernbetätigt parametrierbaren, elektrischen Schwellenwerteinrichtung mit den Merkmalen des Oberbegriffs des Anspruchs 1.

Für verschiedene technische Anwendungen ist es erforderlich, druckführende Anlagen hinsichtlich des herrschenden Drucks zu überwachen, so dass beim Erreichen eines Grenzwertes alle Druck erzeugenden Elemente über ein Steuerungssystem abgeschaltet werden können und/oder der Überdruck gezielt abgebaut werden kann.

Dies gilt insbesondere für Kunststoffextrusionsanlagen, in denen neben hohen Drücken in der verarbeiteten Kunststoffschmelze regelmäßig hohe Temperaturen auftreten. Die für Kunststoffextruder einschlägige Norm DIN EN 1114-1:2012-01 schreibt bei den Sicherheitsanforderungen und Schutzmaßnahmen vor, dass der Extruder und die weiteren unter Überdruck stehenden Teile gegen Überschreiten des vom Maschinenhersteller angegebenen maximal zulässigen Innendrucks gesichert sein müssen, wobei eine der als zulässig erachteten Maßnahmen das Vorsehen eines Druckaufnehmersystems nach EN ISO 13849-1 :2008, PL =c ist, das beim Erreichen eines Grenzwertes alle Druck erzeugenden Elemente über das Steuerungssystem abschaltet. Die zuletzt genannte Norm EN 13849-1:2008 bezieht sich auf Gestaltungsleitsätze zu sicherheitsbezogenen Teilen von Steuerungen und zeigt den Zusammenhang zwischen dem geforderten Performance Level (PL) und einem Safety Integrity Level (SIL) auf. In diesem Zusammenhang besteht die Forderung, dass in der Überlastsicherungseinrichtung Grenzwerte hinterlegt sind, die während des Anlagenbetriebs unveränderlich sind.

Die im Falle der Kunststoffextrusionsanlagen vorzusehenden Grenzwerte sind jedoch nicht nur anlagenspezifisch, sondern ggf. auch von dem verarbeiteten Material abhängig, also prozessbedingt. Demzufolge müssen von dem Verarbeiter aus einer Gruppe von verschiedenen Sensoren jeweils geeignete Sensoren mit jeweils unterschiedlichen Schwellenwerten ausgewählt und bedarfsgerecht eingebaut werden. Dies zieht hohe Kosten für die mehrfache Beschaffung von Sensoren und die Umbauten an der Anlage nach sich. Eine Drucksensoranordnung mit einer fernbetätigt parametrierbaren, elektrischen Schwellenwerteinrichtung ist wünschenswert: auf die Drucksensoranordnung könnte über eine Datenverbindung zugegriffen werden, so dass mittels einer Software die relevanten Grenzwerte neu gesetzt werden können. Daraus ergäbe sich der Vorteil, dass sie in einfacher Weise an die jeweilige Anlage, in die sie eingebaut wird, und den darin durchgeführten Prozess angepasst werden kann. Allerdings wäre bei einer ungesicherten, fernbetätigten Parametrierung nicht ausgeschlossen, dass während des laufenden Betriebs über die Softwareebene auf die Schwellenwerteinrichtung zugegriffen wird und die Grenzwerte während des Betriebs der Anlage verändert werden, wobei unter Umständen falsche Grenzwerte hinterlegt werden könnten. Daher müssten die Firmware und insbesondere außenliegende Steuerungssoftware in die Sicherheitsbetrachtung einbezogen werden.

EP3396347 A1 offenbart eine Drucksensoranordnung mit benutzergesteuerter Freischaltung aus dem Nahbereich.

Die Aufgabe der Erfindung besteht darin, eine Drucksensoranordnung mit einer fernbetätigt parametrierbaren, elektrischen Schwellenwerteinrichtung der eingangs genannten Art so weiterentwickeln, dass damit eine regelkonforme, manipulationssichere Überwachung von technischen Anlagen, insbesondere eine Drucküberwachung in Kunststoffextrusionsanlagen, möglich ist.

Diese Aufgabe wird durch eine Drucksensoranordnung mit den Merkmalen des Anspruchs 1 gelöst.

Die Erfindung beruht darauf, dass die Schaltschwellen in der Drucksensoranordnung zwar fernbetätigt über eine externe Datenleitung verändert werden können, so dass eine komfortable Anpassung an den jeweiligen Prozess möglich ist, dass dafür jedoch die physische Anwesenheit eines Bedieners in der Nähe der Sensoranordnung erforderlich ist. Der Benutzer muss eine Hardwareverriegelung der internen Datenbusleitung zwischen den elektronischen Baugruppen öffnen, damit der Remote-Zugriff über die externe Datenbusleitung möglich ist.

Damit wird eine Lösung bereitgestellt, die insbesondere ohne eine Sicherheitsbetrachtung für außerhalb der Drucksensoranordnung liegende Software wie z. B. eine Maschinensteuerung auskommt. Mit der Erfindung können Änderungen durch eine extern ansteuernde Software vorgenommen werden, ohne erneut eine neue aufwändige Sicherheitsbetrachtung durchführen zu müssen.

Die Erfindung sieht dazu vor, die Übertragungseinheit so von der Überwachungseinheit zu trennen, dass im laufenden Betrieb kein Datenaustausch dazwischen möglich ist und somit kein Zugriff auf die Überwachungseinheit von außerhalb des Gehäuses erfolgen kann. Die einzige datenübertragende Verbindung ist durch eine sog. Hardwareverriegelung grundsätzlich physisch unterbrochen. Dies erfolgt beispielsweise darüber, dass die Datenleitung über ein Relais geführt ist. Die Hardwareverriegelung kann nur dadurch gelöst und damit die Datenverbindung hergestellt werden, indem der Benutzer im unmittelbaren Nahbereich der Drucksensoranordnung mit physikalischen, in dem Nahbereich wirkenden, insbesondere berührungslos von außen wirkenden oder einsetzbaren Mitteln auf eine Freigabeeinrichtung im Inneren des Gehäuses der Drucksensoranordnung einwirkt.

"Nahbereich" ist im Sinne der vorliegenden Erfindung folglich so definiert, dass die Freigabe nur erreicht werden kann, wenn der Benutzer sich so nah an der Drucksensoranordnung aufhält, dass er sich davon überzeugen kann, dass ein sicherer Betriebszustand oder Ruhezustand an der Maschine vorliegt, in die die Drucksensoranordnung eingebaut ist, bevor er die Hardwareverrieglung aufhebt.

Neben berührungslos wirkenden Mitteln wie Licht oder elektrischen oder magnetischen Feldern können auch einfache mechanische Mittel wie ein von außen durch eine Öffnung erreichbarer Taster oder eine Steckbrücke vorgesehen sein, die ins Gehäuse eingesetzt wird, um die Hardwareverriegelung aufzuheben.

Bei dem wenigstens einen Parametrierungsmodul für die Einstellung der Schaltschwellen innerhalb der Überwachungseinheit handelt es sich bevorzugt jeweils um ein Digital-Potentiometer.

Die Ansteuerung erfolgt vorzugsweise über eine serielle Datenbusleitung und insbesondere per Serial Peripheral Interface (SPI) von dem Mikrocontroller der Übertragungseinheit. Der Zugriff auf das Parametrierungsmodul erfolgt durch den Nutzer von außerhalb des Gehäuses über die IO- Link-Schnittstelle.

Die Firmware des Mikrocontrollers der Übertragungseinheit als auch darüber liegende Software-Schichten sind in der Sicherheitsbetrachtung nicht berücksichtigt und brauchen erfindungsgemäß auch nicht berücksichtigt zu werden. Darum ist die Einstellbarkeit des Potentiometers per Hardware unterbunden sobald der Schaltpunkt eingestellt wurde.

Zur Freigabe können optische Mittel eingesetzt werden, indem ein lichtabhängiges elektrisches Bauelement wie eine Fotodiode eingesetzt wird, das durch eine Gehäuseöffnung hindurch aktiv vom Benutzer beleuchtet werden muss.

Weiterhin ist es möglich, magnetische Mittel einzusetzen, um einen REED-Kontakt als Freigabeelement anzusprechen, oder einen NFC-Tag, der auf einen geeigneten Leser im Gehäuse wirkt.

Das Drucksensorelement ist vorzugsweise parallel mit der Übertragungseinheit wie der Überwachungseinheit verbunden, so dass der von demselben Sensorelement erfasste Messwert zum einen über die Übertragungseinheit und eine Datenleitung wie einen IO-Link an eine übergeordnete Steuer- oder Regelungseinrichtung gegeben werden kann, und zugleich der Messwert hinsichtlich des zulässigen Intervalls in der Überwachungseinheit ausgewertet werden kann.

Die Überwachungseinheit besteht vorzugsweise aus einem Eingangsverstärker, einem Komparator mit einstellbarer Schaltschwelle, sowie einem mechanischen Relais oder Halbleiter-Relais für die potentialfreie Verbindung zweier Anschlüsse, wodurch ein Ausgangssignal erzeugt wird. Während bei Vorliegen eines geregelten und zulässigen Betriebszustands ein Schaltkontakt geschlossen ist, wird im Überlastfall der Kontakt geöffnet.

Bevorzugt wird das Ausgangssignal des Komparators mit dem Potential der Versorgungsspannung in der Sensorleitung verknüpft, so dass dort eventuell auftretende Störungen ebenfalls dazu führen, dass der Kontakt an den Ausgangsanschlüssen geöffnet wird.

Wird die Spannungsversorgung der Drucksensoranordnung insgesamt unterbrochen, wird aufgrund der Ausgestaltung der Ausgangsstufe als Öffner der Kontakt ebenfalls geöffnet.

Eine bevorzugte Ausführungsform sieht zwei Parametrierungsmodule vor, so dass ein oberer und ein unterer Grenzwert eingestellt werden können, die beide von dem Komparator überwacht werden. Während der obere Grenzwert unmittelbar der Betriebssicherheit dient, hat die Überwachung des unteren Grenzwerts den Zweck, abnorme Messwerte festzustellen, die durch Störungen in der Drucksensoranordnung oder der Anlage bedingt sein können.

Beispielsweise ist das der Fall, wenn der gemessene Druck scheinbar einen negativen Wert besitzt. Indem der untere Grenzwert auf null gesetzt wird, wird ein negativer Messwert als fehlerhaft signalisiert.

Die erfindungsgemäße Drucksensoranordnung ist bevorzugt als Schmelzedrucksensoranordnung für eine Kunststoffextrusionsanlage ausgebildet. Hierbei ergibt sich die Besonderheit, dass der Druck in der Kunststoffschmelze gemessen werden muss, wobei die Drucksensoranordnung an der Messstelle regelmäßig Drücken von mehr als 100 bar und Temperaturen von mehr als 200°C standhalten muss. Für diesen Anwendungsfall ist ein Gehäuse mit einem langen, hohlen Schaft vorgesehen, an dessen Ende eine erste Membran angeordnet ist. Die Membran wird an der Messstelle positioniert. Das eigentliche Drucksensorelement befindet sich an einer weiteren Membran in einem Gehäuseteil jenseits des Schaftes, wobei die Druckübertragung zwischen den Membranen über eine flüssigkeitsgefüllte Kapillare erfolgt.

Der Ablauf der Einstellung des Schaltpunktes bei der erfindungsgemäßen Drucksensoranordnung gestaltet sich wie folgt:
Die Drucksensoranordnung wird über die bereitgestellten Anschlüsse mit einem IO-Link-Master verbunden. Anschließend wird die mechanische Sicherung vor der Fotodiode, die bei einer bevorzugten Ausführungsform das Freigabemodul bildet, entfernt, und die Fotodiode wird über eine externe Lichtquelle wie z.B. eine Taschenlampe beleuchtet. Nun wird der Parameter für den gewünschten Grenzwert über die IO-Link-Schnittstelle auf das jeweilige Parametrierungsmodul geschrieben und damit fest in der Überlastsicherungseinrichtung eingestellt. Nach erfolgter Einstellung wird die externe Lichtquelle entfernt und die mechanische Sicherung wieder an der Gehäuseöffnung angebracht. Abschließend muss die korrekte Einstellung der Schaltschwelle durch den Nutzer überprüft werden, indem die Drucksensoranordnung mit dem jeweiligen Signal beaufschlagt wird und der Schaltpunkt angefahren wird. Ist die korrekte Einstellung des Schaltpunktes sichergestellt, kann die Drucksensoranordnung in Betrieb genommen werden. Sollte der Schaltpunkt nicht korrekt eingestellt worden sein, ist die Prozedur zu wiederholen.

Vorgesehen ist noch eine Einrichtung, durch die der ursprüngliche Zustand mit der unterbrochenen internen Datenbusleitung wiederhergestellt wird, wenn entweder eine voreingestellte Zeitspanne abläuft oder sobald der Benutzer seine Einwirkung aus dem Nahbereich auf das Freigabeelement beendet. An dem mit dem Brückenelement gekoppelten Freigabeelement wird die interne Datenleitung wieder unterbrochen, so dass keine Grenzwerte mehr über die externe Datenbusleitung parametriert werden können.

Die Erfindung wird nachfolgend mit Bezug auf das in den Zeichnungen dargestellte Ausführungsbeispiel näher erläutert. Die Figuren zeigen im Einzelnen:
- Fig. 1: eine Drucksensoranordnung in einem Blockschaltbild; und
- Fig. 2: das Gehäuse der die Drucksensoranordnung im Schnitt.

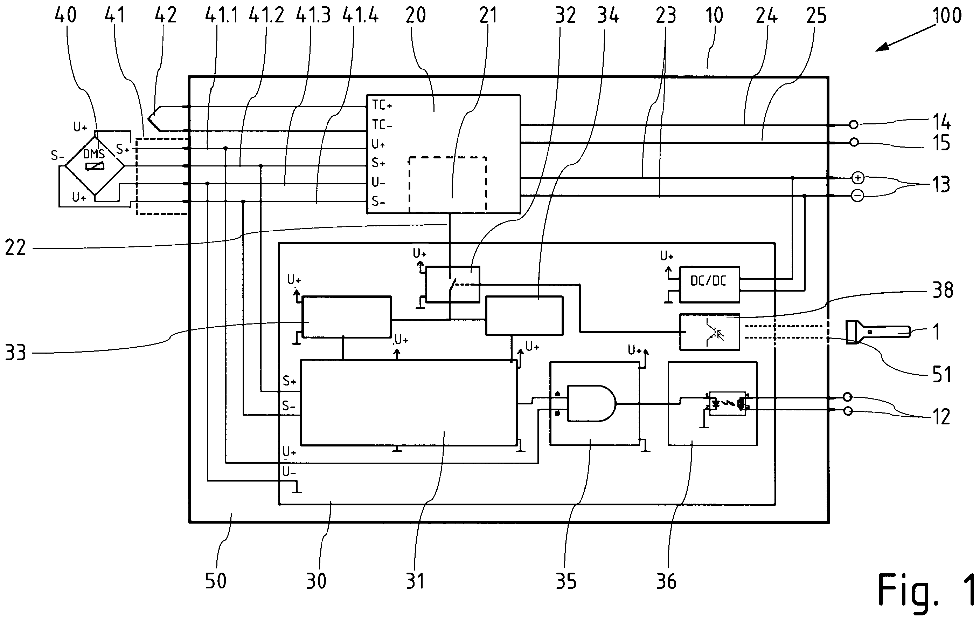

In Figur 1 ist ein Blockschaltbild einer Drucksensoranordnung 100 nach der Erfindung dargestellt. Sie umfasst im Wesentlichen:
- einen Drucksensor 40, der in an sich bekannter Form als Brückensensor nach dem Prinzip der WHEATSTONE-Brücke aufgebaut ist,
- eine Übertragungseinheit 20, die als IO-Link-Client ausgestaltet ist und die mit dem Drucksensor 40 über eine wenigstens vierpolige Sensorleitung 41 verbunden ist;
- eine Überwachungseinheit 30;
- ein geschlossenes und ggf. versiegelbares Gehäuse 10, in dem zumindest die Übertragungseinheit 20 und die Überwachungseinheit 30 aufgenommen sind.

Die Übertragungseinheit 20 und die Überwachungseinheit 30 sind auf einer gemeinsamen Platine 50 untergebracht, sind jedoch voneinander getrennt darauf positioniert, um eine gegenseitige Beeinflussung zu verhindern. Verbunden sind die beiden Einheiten 20, 30 lediglich durch:
- eine gemeinsame Zuführung der Versorgungspannung, die von Anschlusspolen 13 am Gehäuse 10 über eine mehradrige Leitung 21 zur Übertragungseinheit 20 geführt ist und von dort in Adern 41.1, 41.3 in der Sensorleitung 41 weitergeführt ist; die Spannung kann insbesondere über einen IO-Link-Master bereitgestellt werden und beträgt 24 V;
- ein paralleler Anschluss an den Brückensensor über zwei Adern 41.2, 41.4 in der Sensorleitung 41;
- ein Serial Peripheral Interface (SPI) 21 für die Einstellung der Schaltschwelle, das über die Datenbusleitung 22 an die Überwachungseinheit 30 angebunden ist.

Am Gehäuse 10 sind folgende Anschlüsse vorgesehen:
- ein zweipoliger Anschluss 13 für die Spannungsversorgung;
- ein wenigstens einpoliger Anschluss 14 für einen seriellen Datenbus, insbesondere nach IO-Link-Spezifikation, der über eine Datenbusleitung 24 zu der Übertragungseinheit 20 geführt ist;
- ein Analogausgang 15, der mit einer Analogleitung 25 verbunden ist, für die optionale Ausgabe eines analogen Messwerts für den gemessenen Druck, und
- zwei Signalausgangsanschlüsse 12, über die z. B. ein Signal nach außen abgegeben oder eine externe Abschalteinrichtung betätigt werden kann.

Vorzugsweise wird von der Drucksensoranordnung 100 ein Kontakt zwischen den Signalausgangsanschlüssen 12 ständig geschlossen, solange sich die von dem Drucksensor 40 erfassten Werte in dem innerhalb der Überwachungseinheit 30 definierten, zulässigen Wertebereich befinden. Das bedeutet umgekehrt, dass:
- ein Ausfall der Spannungsversorgung oder
- ein Versagen von Bauteilen innerhalb der Drucksensoranordnung 100 oder
- das Über- oder Unterschreiten des zulässigen Druckmesswerts durch den gemessenen Ist-Wert
jeweils dazu führen, dass die Signalisierung eines sicheren Betriebszustands an den Signalausgangsanschlüssen 12 aufgehoben wird.

Am Gehäuse 10 ist außerdem eine Ausnehmung 11 vorgesehen, die mit einer lichtdurchlässigen Abdeckung versehen sein kann. Dahinter ist ein Freischaltmodul 38 angeordnet, das z. B. in Form einer Fotodiode oder eines Fototransistors ausgebildet ist. Durch temporäres Aussenden eines Lichtstrahls mit einer außerhalb des Gehäuses 10 positionierten Leuchte 1 wird am Freischaltmodul 38 ein Freigabesignal erzeugt, durch das ein Brückenschaltelement 32 betätigt wird. Damit wird eine am Brückenschaltelement 32 zuvor dauerhaft unterbrochene, interne Datenbusleitung 22 des seriellen Datenbusses geschlossen, die sich von der Übertragungseinheit 20 zu zwei Parametrierungsmodulen 33, 34 in der Überwachungseinheit 30 erstreckt.

Bei den Parametrierungsmodulen 33, 34 handelt es sich um elektrische Einrichtungen, bei denen ein charakteristischer Stellwert über den Datenbus eingestellt werden kann. Hierbei kann es sich z. B. um Digitalpotentiometer handeln.

in den Parametrierungsmodulen 33, 34 sind der obere und der untere Schwellenwert für die in der Überwachungseinheit 30 implementierte elektrische Schwellenwerteinrichtung 31 hinterlegt.

Die Sensorsignale des Drucksensors 40 liegen über die signalführenden Adern 41.2, 41.4 der Sensorleitung 41 an der Schwellenwerteinrichtung 31 an. Solange der Komparator in der Schwellenwerteinrichtung 31 erkennt, dass der erfasste Messwert, ggf. nach Vornahme von Korrekturen, innerhalb des zulässigen Bereichs liegt, wird ein positives Spannungssignal abgegeben. Dieses ist über ein logisches UND-Glied 35 und die Ader 41.1 mit dem Pluspol der Versorgungsspannung am Drucksensor 40 verknüpft. Nur wenn die Versorgungsspannung anliegt und zugleich Am Ausgang der Schwellenwerteinrichtung 31 ein positives Potential anliegt, besitzt auch der Ausgang des UND-Glieds ein positives Potential. Darüber wird ein Schaltelement wie insbesondere ein Optokoppler 36 betätigt. Folglich ist der Kontakt zwischen den Terminals 12 geschlossen und signalisiert einen sicheren Betriebszustand der Maschine, an der die Drucksensoranordnung 100 angebracht ist.

Sollte es hingegen entweder zu einem Spannungsabfall an der Sensorleitung 41 kommen oder erkannt werden, dass der gemessene und ggf. korrigierte Messwert eine der in den Parametrierungsmodulen 33, 34 hinterlegten Schwellenwerte unter- bzw. überschreitet, fällt das Potential am Ausgang des UND-Glieds 35 ab.

Um die Schwellenwerte neu zu definieren, muss das Freischaltmodul 38 mit Licht aktiviert werden. Die Datenbusleitung 22 wird daraufhin am Brückenschaltelement 32 geschlossen. Durch eine von außen an die Übertragungseinheit 20 im Gehäuse 10 herangeführte Datenbusleitung kann nun jedes der Parametrierungsmodulen 33, 34 nacheinander adressiert werden und ein neuer Wert darin hinterlegt und festgeschrieben werden.

Danach wird die Lichtquelle an der Gehäuseöffnung 11 entfernt. Die Datenbusleitung 22 wird am Brückenelement 32 hardwareseitig wieder unterbrochen, so dass es nicht mehr möglich ist, die Parametrierungsmodulen 33, 34 von außen anzusprechen und zu verändern.

Ein zusätzlicher Temperatursensor 42 kann vorgesehen sein, der ebenfalls mit der Übertragungseinheit 20 verbunden ist. Da die Temperaturmessung für den Anwendungsfall nicht sicherheitsrelevant ist, müssen keine Schaltschwellen parametriert werden.

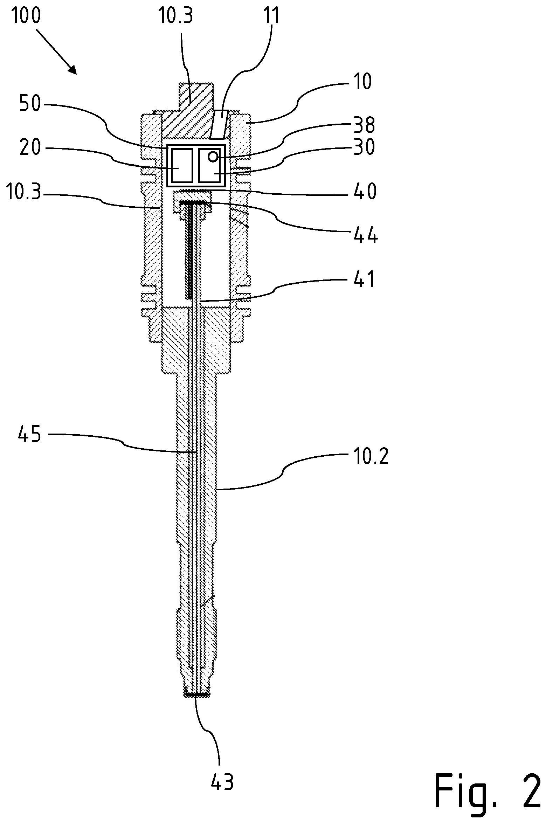

In Figur 2 ist ein Schnitt durch das Gehäuse 10 der Drucksensoranordnung 100 gezeigt. Das Gehäuse besitzt einen hohlzylindrischen Gehäuseteil 10.1, in welchem die beiden wesentlichen elektronischen Baugruppen, nämlich die Übertragungseinheit 20 und die Überwachungseinheit 30 auf der gemeinsamen Platine 50 untergebracht sind. An der Spitze eines hohlen Gehäuseschaftes 10.2 ist eine erste Membran 43 angeordnet. Ein dort anliegender Druck lenkt die Membran 43 aus. Über eine in einer Kapillarleitung 45 stehende Flüssigkeitssäule wird eine zweite Membran 44 ausgelenkt, die mit einem Drucksensorelement 40 verbunden ist, so dass dort die Umwandlung in ein elektrisches Messsignal erfolgt. Da also auch der elektrische Messaufnehmer innerhalb des Gehäuses angeordnet ist, kann das Gehäuse vollständig geschlossen ausgebildet sein.

Die Anschlüsse 12, 13, 14 und 15 sind in einem mehrpoligen Stecker oder in einer mehrpoligen Buchse an einem oberen Gehäuseteil 10.3 zusammengefasst, welcher den hohlzylindrischen Gehäuseteil 10.1 abschließt. In dem deckelartigen Gehäuseteil 10.3 ist eine verschließbare Gehäuseöffnung 11 eingebracht, um auf das im Inneren auf der Platine 50 angebrachte, optisch wirkende Freigabeelement 38 leuchten zu können. Nach erfolgter Parametrierung der Drucksensoranordnung 100 wird die Gehäuseöffnung 11 z. B. mit einer Schraube verschlossen und die Beleuchtung des Freigabeelements 38 verhindert.

### Bezugszeichen:

- 100: Drucksensoranordnung

- 10: Gehäuse
- 10.1, 10.3: Gehäuseteile
- 10.2: Gehäuseschaft
- 11: Gehäuseöffnung
- 12: Anschlussterminals
- 13: Anschlüsse für die Spannungsversorgung
- 14: Anschluss für externen seriellen Datenbus
- 15: Analogausgang

- 20: Übertragungseinheit
- 21: Serial Peripheral Interface
- 22: interne Datenbusleitung
- 23: Spannungsversorgungsleitung
- 24: Datenbusleitung
- 25: Analogwertleitung

- 30: Überwachungseinheit
- 31: Schwellenwerteinrichtung
- 32: Brückenschaltelement
- 33, 34: Parametrierungsmodule
- 35: UND-Glied
- 36: Optokoppler
- 38: Freigabeelement

- 40: Drucksensorelement
- 41: Sensorleitung
- 41.12...41.4: Adern der Sensorleitung
- 42: Temperatursensor
- 43: erste Membran
- 44: zweite Membran
- 45: Kapillarleitung

- 50: Platine

- 1: Leuchte

## Patentansprüche

1. Drucksensoranordnung (100) mit einer fernbetätigt parametrisierbaren, elektrischen Schwellenwerteinrichtung (31), wenigstens umfassend
- ein elektrisches Sensorelement (40)
- eine Übertragungseinheit (20), die zumindest mit dem Sensorelement (40) und mit einer zu einem externen Anschluss (14) führenden Datenbusleitung (24) verbunden ist;
- eine Überwachungseinheit (30), die die Schwellenwerteinrichtung (31) enthält und die mit dem Sensorelement (40) und einem Aktor zur Erzeugung eines Ausgangssignals verbunden ist;
- ein geschlossenes Gehäuse (10), in welchem zumindest die Übertragungseinheit (20) und die Überlastsicherungseinheit (30) angeordnet sind;
**dadurch gekennzeichnet,**
- **dass** die Übertragungseinheit (20) mit der Überwachungseinheit (30) über wenigstens eine interne Datenbusleitung (22) verbunden ist, die an einem elektrisch schaltbaren Brückenschaltelement (32) unterbrochen ist, und
- **dass** in der Überwachungseinheit (30) für die Einstellung eines unteren und/oder eines oberen Druck-Grenzwerts wenigstens ein mit der Schwellenwerteinrichtung (31) verbundenes Parametrierungsmodul (33, 34) vorgesehen ist, das über die interne Datenbusleitung (22) mit der Übertragungseinheit (20) durch Schließen des Brückenschaltelements (32) zu verbinden ist und
- **dass** das Brückenschaltelement (32) über ein Freigabeelement (38) zu schließen ist, das aus dem Nahbereich des Gehäuses (10) von außen betätigbar ist.

2. Drucksensoranordnung (100) nach Anspruch 1, **dadurch gekennzeichnet, dass** das Parametrierungsmodul (33, 34) als Digitalpotentiometer ausgebildet ist, das mit der internen Datenbusleitung (22) verbunden ist.

3. Drucksensoranordnung (100) nach Anspruch 1 oder 2, **dadurch gekennzeichnet, dass** für einen unteren und einen oberen Grenzwert je ein Parametrierungsmodul (33, 34) vorgesehen ist und beide Parametrierungsmodule (33, 34) mit der Schwellenwerteinrichtung (31) verbunden sind.

4. Drucksensoranordnung (100) nach einem der vorhergehenden Ansprüche, **dadurch gekennzeichnet, dass** ein Ausgangssignal der Schwellenwerteinrichtung (31) mit dem Potential der Versorgungsspannung in der Sensorleitung (41) über ein UND-Glied (35) verknüpft ist.

5. Drucksensoranordnung (100) nach Anspruch 4, **dadurch gekennzeichnet, dass** das Ausgangssignal der Schwellenwerteinrichtung (31) oder des UND-Glieds (35) an einem Optokoppler (36) oder an einem Relais anliegt, durch welche(s) zwei Signalausgangsanschlüsse (12) potentialfrei miteinander verbindbar sind.

6. Drucksensoranordnung (100) nach einem der vorhergehenden Ansprüche, **dadurch gekennzeichnet, dass** das Freigabeelement (38) ein optisch wirkendes elektrisches Element ist und dass das Gehäuse (10) wenigstens eine verschließbare Gehäuseöffnung (11) aufweist, mittels derer das Freigabeelement (38) beleuchtbar ist.

7. Drucksensoranordnung (100) nach einem der vorhergehenden Ansprüche, **dadurch gekennzeichnet, dass** das Freigabeelement (38) ein magnetisch wirkendes, elektrisches Element ist.

8. Drucksensoranordnung (100) nach einem der vorhergehenden Ansprüche, **dadurch gekennzeichnet, dass** das Sensorelement (40) ein Drucksensorelement für eine Kunststoffextrusionsanlage ist und der Druck über eine in einer Kapillarleitung (45) stehende Flüssigkeitssäule zwischen einer erstem Membran (43) an der Spitze eine Gehäuseschaftes (10.2) und einer zweiten Membran (44), die mit dem Drucksensorelement (40) verbunden ist, übertragen wird.

9. Verfahren zur Einstellung eines Schaltpunktes bei einer Drucksensoranordnung (100) mit einer fernbetätigt parametrisierbaren, elektrischen Schwellenwerteinrichtung (31) nach einem der vorhergehenden Ansprüche, mit wenigstens folgenden Schritten:
- Verbinden der Drucksensoranordnung (100) mit einer externen Datenbusleitung;
- Schließen der internen Datenbusleitung (22) mittels des Brückenschaltelements (32) durch Benutzereinwirkung auf das Freigabeelement (38) aus dem Nahbereich der Drucksensoranordnung (100) und von außerhalb des Gehäuses (10);
- Schreiben wenigstens eines Parameters für einen Grenzwert in das Parametrierungsmodul (33, 34) über die externe Datenbusleitung (22) und
- Trennen der internen Datenbusleitung (22) durch Beendigung der Einwirkung auf das Freigabeelement (38).

## Claims

1. Pressure sensor assembly (100) having a remotely parameterizable, electrical threshold device (31), at least comprising:
- an electrical sensor element (40);
- a transmission unit (20) which is connected at least to the sensor element (40) and to a data bus line (24) leading to an external connection (14);
- a monitoring unit (30) which contains the threshold device (31) and is connected to the sensor element (40) and an actuator for generating an output signal;
- a closed housing (10) in which at least the transmission unit (20) and the overload protection unit (30) are arranged;
**characterized**
- **in that** the transmission unit (20) is connected to the monitoring unit (30) via at least one internal data bus line (22) which is interrupted at an electrically switchable bridge switching element (32), and
- **in that** at least one parameterization module (33, 34) connected to the threshold device (31) is provided in the monitoring unit (30) for adjusting a lower and/or an upper pressure limit value, which parameterization module can be connected to the transmission unit (20) via the internal data bus line (22) by closing the bridge switching element (32), and
- **in that** the bridge switching element (32) can be closed via a release element (38) which can be actuated out of the region close to the housing (10) from the outside.

2. Pressure sensor assembly (100) according to Claim 1, **characterized in that** the parameterization module (33, 34) is designed as a digital potentiometer which is connected to the internal data bus line (22).

3. Pressure sensor assembly (100) according to Claim 1 or 2, **characterized in that** a respective parameterization module (33, 34) is provided for a lower and an upper limit value and both parameterization modules (33, 34) are connected to the threshold device (31).

4. Pressure sensor assembly (100) according to any of the preceding claims, **characterized in that** an output signal of the threshold device (31) is connected to the potential of the supply voltage in the sensor line (41) via an AND element (35).

5. Pressure sensor assembly (100) according to Claim 4, **characterized in that** the output signal of the threshold device (31) or the AND member (35) is applied to an optocoupler (36) or to a relay by which two signal output connections (12) can be connected to each other without potential.

6. Pressure sensor assembly (100) according to any of the preceding claims, **characterized in that** the release element (38) is an optically acting electrical element, and **in that** the housing (10) has at least one closable housing opening (11) by means of which the release element (38) can be illuminated.

7. Pressure sensor assembly (100) according to any of the preceding claims, **characterized in that** the release element (38) is a magnetically acting, electrical element.

8. Pressure sensor assembly (100) according to any of the preceding claims, **characterized in that** the sensor element (40) is a pressure sensor element for a plastic extrusion system and the pressure is transmitted via a liquid column in a capillary line (45) between a first membrane (43) at the tip of a housing shaft (10.2) and a second membrane (44) which is connected to the pressure sensor element (40).

9. Method for adjusting a switching point in a pressure sensor assembly (100) having a remotely parameterizable, electrical threshold device (31) according to any of the preceding claims, comprising at least the following steps:
- connecting the pressure sensor assembly (100) to an external data bus line;
- closing the internal data bus line (22) by means of the bridge switching element (32) by user action on the release element (38) from the region close to the pressure sensor assembly (100) and from outside the housing (10);
- writing at least one parameter for a limit value to the parameterization module (33, 34) via the external data bus line (22) and
- disconnecting the internal data bus line (22) by terminating the action on the release element (38).

## Revendications

1. Ensemble capteur de pression (100) pourvu d'un dispositif de valeur seuil électrique (31) paramétrable par télécommande, comprenant au moins
- un élément capteur électrique (40) ;
- une unité de transmission (20) qui est reliée au moins à l'élément capteur (40) et à une ligne de bus de données (24) conduisant à une borne externe (14) ;
- une unité de surveillance (30) qui comporte le dispositif de valeur seuil (31) et qui est reliée à l'élément capteur (40) et à un actionneur pour produire un signal de sortie ;
- un boîtier fermé (10) dans lequel au moins l'unité de transmission (20) et l'unité de protection contre les surcharges (30) sont disposées ;
**caractérisé**
- **en ce que** l'unité de transmission (20) est reliée à l'unité de surveillance (30) par au moins une ligne de bus de données interne (22) qui est interrompue au niveau d'un élément de commutation en pont (32) commutable électriquement, et
- **en ce que** dans l'unité de surveillance (30), pour le réglage d'une valeur limite de pression inférieure et/ou supérieure, au moins un module de paramétrage (33, 34) relié au dispositif de valeur seuil (31) est prévu qui est à relier par l'intermédiaire de la ligne de bus de données interne (22) à l'unité de transmission (20) par la fermeture de l'élément de commutation en pont (32), et
- **en ce que** l'élément de commutation en pont (32) est à fermer par l'intermédiaire d'un élément de déblocage (38) qui peut être actionné depuis l'extérieur à partir de la zone proche du boîtier (10).

2. Ensemble capteur de pression (100) selon la revendication 1, **caractérisé en ce que** le module de paramétrage (33, 34) est réalisé sous la forme d'un potentiomètre numérique qui est relié à la ligne de bus de données interne (22).

3. Ensemble capteur de pression (100) selon la revendication 1 ou 2, **caractérisé en ce que** pour une valeur limite inférieure et une valeur limite supérieure, respectivement un module de paramétrage (33, 34) est prévu, et les deux modules de paramétrage (33, 34) sont reliés au dispositif de valeur seuil (31).

4. Ensemble capteur de pression (100) selon l'une quelconque des revendications précédentes, **caractérisé en ce qu'**un signal de sortie du dispositif de valeur seuil (31) est associé au potentiel de la tension d'alimentation dans la ligne de capteur (41) par l'intermédiaire d'une porte ET (35).

5. Ensemble capteur de pression (100) selon la revendication 4, **caractérisé en ce que** le signal de sortie du dispositif de valeur seuil (31) ou de la porte ET (35) est appliqué à un optocoupleur (36) ou à un relais qui permet de relier à potentiel flottant deux bornes de sortie de signal (12) l'une à l'autre.

6. Ensemble capteur de pression (100) selon l'une quelconque des revendications précédentes, **caractérisé en ce que** l'élément de déblocage (38) est un élément électrique à effet optique, et **en ce que** le boîtier (10) présente au moins une ouverture de boîtier verrouillable (11) qui permet d'éclairer l'élément de déblocage (38).

7. Ensemble capteur de pression (100) selon l'une quelconque des revendications précédentes, **caractérisé en ce que** l'élément de déblocage (38) est un élément électrique à effet magnétique.

8. Ensemble capteur de pression (100) selon l'une quelconque des revendications précédentes, **caractérisé en ce que** l'élément capteur (40) est un élément capteur de pression pour une installation d'extrusion de matière plastique, et la pression est transmise par une colonne de liquide se trouvant dans une ligne capillaire (45) entre une première membrane (43) au bout d'une tige de boîtier (10.2) et une deuxième membrane (44) qui est reliée à l'élément capteur de pression (40).

9. Procédé permettant de régler un point de commutation sur un ensemble capteur de pression (100) pourvu d'un dispositif de valeur seuil électrique (31) paramétrable par télécommande selon l'une quelconque des revendications précédentes, comprenant au moins les étapes suivantes consistant à :
- relier l'ensemble capteur de pression (100) à une ligne de bus de données externe ;
- fermer la ligne de bus de données interne (22) au moyen de l'élément de commutation en pont (32) par une action utilisateur sur l'élément de déblocage (38) à partir de la zone proche de l'ensemble capteur de pression (100) et depuis l'extérieur du boîtier (10) ;
- écrire au moins un paramètre pour une valeur limite dans le module de paramétrage (33, 34) par l'intermédiaire de la ligne de bus de données externe (22), et
- séparer la ligne de bus de données interne (22) en terminant l'action sur l'élément de déblocage (38).
